# EUROPÄISCHE PATENTSCHRIFT

(11) **EP 0 566 950 B1**
(45) Veröffentlichungstag und Bekanntmachung des Hinweises auf die Patenterteilung: **02.08.1995**
(21) Anmeldenummer: 93105951.3
(22) Anmeldetag: 13.04.1993
(51) Int. Cl.: C01B 17/80, C22C 38/40

(54) **Verwendung von Knet- und Gusswerkstoffen sowie Schweisszusatzwerkstoffen für mit heisser konzentrierter Schwefelsäure oder Oleum beaufschlagte Bauteile sowie Verfahren zur Herstellung von Schwefelsäure**
Use of wrought and cast alloys and welding additives for parts contacted by oleum or concentrated hot sulphuric acid and process for the preparation of sulphuric acid
Utilisation d'alliages de forgeage et de moulage ainsi que de métaux d'apport pour des pièces venant en contact avec de l'oléum ou de l'acide sulfurique concentré chaud et procédé de préparation d'acide sulfurique

(30) Priorität: 23.04.1992 DE 4213325
(43) Veröffentlichungstag der Anmeldung: 27.10.1993
(73) Patentinhaber: BAYER AG, 51368 Leverkusen (DE)
(72) Erfinder: Horn, Elmar-Manfred, Dr,, W-5090 Leverkusen (DE); Savakis, Stylianos, Dr., W-5000 Köln 80 (DE)

(56) Entgegenhaltungen:
- EP-A- 0 013 507
- EP-A- 0 378 998
- EP-A- 0 516 955
- DE-A- 3 320 527
- FR-A- 688 359

## Beschreibung

Die vorliegende Erfindung betrifft die Verwendung von Werkstoffen für mit heißer, konzentrierter Schwefelsäure und 0 bis 10 Gew.-%igem Oleum beaufschlagten Bauteile sowie die Herstellung von Schwefelsäure unter Verwendung dieser Werkstoffe.

Im Schrifttum finden sich zahlreiche Angaben zur Korrosionsbeständigkeit von Werkstoffen gegenüber heißer, konzentrierter Schwefelsäure.

Wegen der mit steigender Schwefelsäure-Konzentration zunehmenden Löslichkeit des Bleisulfats können Blei und seine Legierungen nur bei Konzentrationen bis 78 % H₂SO₄ und nur bis 110°C eingesetzt werden (Ullmanns Encyclopädie der technischen Chemie, 4. Auflage, Band 21 (1982), S. 157).

Unlegierter Stahl kann in 68-99 %igen Schwefelsäuren bis 70°C verwendet werden, wobei allerdings mit Abtragungsraten bis zu 1,3 mm/a zu rechnen ist (G. Nelson, Corrosion Data Survey, Shell Development Co., San Franzisco, 1950, S. ZT-102A). Im Konzentrationsbereich von 99 bis 100 % H₂SO₄ nimmt die Beständigkeit des unlegierten Stahls deutlich ab. Höhere Strömungsgeschwindigkeiten sind bei unlegiertem Stahl zu vermeiden (Ullmann, loc. cit.; Z. f. Werkst.-Techn. 4 (1973), S. 169/186; R. J. Borges, Corrosion/87, Paper No, 23, NACE, Houston, Texas, 1987).

Mit Chrom oder Kupfer legierte Gußeisensorten sind bei Schwefelsäure-Konzentrationen von 90-99 % bis etwa 120°C beständig (Ullmann, loc. cit.), jedoch ist auch hier die Strömungsabhängigkeit der Korrosion zu beachten (Z. f. Werkst.-Techn., loc. cit.). Der Eisen-Silicium-Gußwerkstoff mit 14-18 % Si besitzt eine sehr gute Korrosionsbeständigkeit in weiten Konzentrations- und Temperaturbereichen (Ullmann loc. cit.); von großem Nachteil sind jedoch die Härte und die Sprödigkeit dieses Sondergußeisens (R. J. Borges, Corrosion/87, loc. cit.; Ullmann, 4. Auflage, Band 3 (1973), S. 21). Nichtrostende austenitische Standard-Stähle, wie gemäß Werkst.-Nr. 1.4571, werden bei konzentrierten Schwefelsäuren bis zu Temperaturen von 85°C eingesetzt. Mit zunehmender Temperatur steigen die Abtragungsraten steil an. Bereits bei 150°C ist mit Abtragungsraten um 1 mm/a zu rechnen (Z. f. Werkst.-Techn. 8 (1977), S. 362/370 und 410/417), wobei die Strömungsabhängigkeit der Korrosion ausgeprägt ist.

Die Verwendung von Nickelbasislegierungen bringt keine Vorteile. Bei Plattenwärmetauschern aus NiMo16Cr15W, Werkst.-Nr. 2.4819 (Typ Hastelloy alloy C-276), die zum Kühlen von konzentrierter Schwefelsäure eingesetzt werden, wird die Produkttemperatur auf 95°C begrenzt (N. Sridhar, Materials Performance März 1988, S. 40/46).

Es hat daher nicht an Vorschlägen gefehlt, die Schwefelsäurebeständigkeit durch Legierungsmaßnahmen zu verbessern. So zeigt die 3,7-4,3 % Si enthaltende nichtrostende, austenitische Stahlsorte X 1 CrNiSi 18 15, Werkst.-Nr. 1.4361, eine wesentlich höhere Beständigkeit als Werkst.-Nr. 1.4571 in beispielsweise 98,5 %iger Schwefelsäure bei 150 und 200°C (Ullmann, Band 3, S. 21); die Strömungsabhängigkeit der Korrosion ist sehr gering (Z. f. Werkst. Techn. 8 (1977), S. 362/370 und 410/417; M. Renner u. R. Kirchheiner, "Korrosionsbeständigkeit von hochlegierten nichtrostenden Sonderstählen in stark oxidierenden Medien", Vortrag anläßlich des Seminars "Nickelwerkstoffe und hochlegierte Sonderstähle", Esslingen, 7./8. April 1986). Durch weiteres Anheben des Si-Gehaltes auf 4,5 bis 5,8 %, bevorzugt 5,0 bis 5,6 %, läßt sich die Korrosionsbeständigkeit der austenitischen, nichtrostenden Stähle in heißen 85 %igen, vorzugsweise 90 %igen Schwefelsäuren, innerhalb gewisser Grenzen verbessern (US-A-4 543 244; DE-A-33 20 527). Für den praktischen Einsatz bei höheren Temperaturen kommt ein derartiger Sonderstahl wegen der ausgeprägten Temperaturabhängigkeit der Korrosion kaum in Betracht. Folgende Abtragungsraten wurden bei einem nichtrostenden, vollaustenitischen Stahl der Zusammensetzung 17,5 % Cr, 17,5 % Ni, 5,3 % Si, Rest im wesentlichen Eisen, in 98,2 %iger Schwefelsäure ermittelt (genannte US' 244 und DE' 527):

| | |
|---|---|
| 125°C | 0,1 mm/a, |
| 135°C | 0,8 mm/a, |
| 145°C | 1,6 mm/a, |

in 93,5 %iger H₂SO₄ wurde bei 85°C eine Korrosionsgeschwindigkeit von 0,25 mm/a festgestellt. Zur Verringerung der Korrosion kann ein anodischer Schutz der Anlagen vorgesehen werden; unter diesen Bedingungen beträgt die Abtragungsrate in 93,5 %iger H₂SO₄ bei 200°C jedoch immer noch 1,1 mm/a. Als Nachteil ist ferner die merkliche Strömungsabhängigkeit der Korrosion des nichtrostenden Chrom-Nickel-Silicium-Stahls in Schwefelsäuren zu werten; beispielsweise beträgt die Abtragungsrate einer rotierenden Scheibe (Durchmesser: 30 mm, Drehzahl: 2.000 min⁻¹) in 96 %iger Schwefelsäure bei 150°C bereits 3,7 mm/a.

Weiterhin wurden härtbare Nickelbasislegierungen mit 2-4 % Si zur Handhabung heißer, mindestens 65 %iger Schwefelsäure vorgeschlagen (DE-C-21 54 126). Die Abtragungsraten in auf 120°C erwärmter Schwefelsäure sind mit etwa 0,6 mm/a jedoch recht hoch. Für eine weitere aushärtbare und strömungsunempfindliche Nickelbasislegierung werden Abtragungsraten von 0,25 mm/a in auf 140°C erwärmter 98 %iger H₂SO₄ angegeben (R. J. Borges, Corrosion/87, loc. cit.).

Ein nichtrostender austenitischer Stahl mit 17 % Cr, 16 %. Ni, 3,7 % Si und 2,3 % Mo kann dagegen nur in kalten Schwefelsäuren bei Konzentrationen unterhalb 10 % und oberhalb 80 % verwendet werden (Druckschrift Nr. 235 der CAFL: Uranus, rost- und säurebeständige Stähle für schwierige Korrosionsprobleme, S. 37).

Ferner beschreibt GB-A-1 534 926 nichtrostende austenitische Chrom-Nickel-Silicium-Kupfer-Molybdän-Stähle mit hoher Korrosionsbeständigkeit in konzentrierter Schwefelsäure; diese Stähle sind durch folgende Zusammensetzung (Massenanteile in %) gekennzeichnet:
- C: max. 0,06 %
- Si: 4,1 bis 12 % (≧ 4,7 %; 6,5 bis 12 %; 7 bis 11 %; 7,5 bis 10 %)
- Mn: max. 4 % (3 %; 1 %, 0,5 %)
- Cr: 6 bis 22 % (6 bis 17 %; 8 bis 15 %; 9 bis 14 %)
- Ni: 10 bis 40 % (10 bis 25 %; 12 bis 23 %; 14 bis 20 %)
- (Mo+1/2W): max. 1,5 % (0,5 bis 1 %)
- Cu: 0,6 bis 4 % (≧ 1 %; 1,5 bis 3,5 %; 2 bis 3 %)
- N: max. 0,2 % und
- Nb+Ta+Zr+V: max. 2 %
Derartigen Stählen haftet ein Mangel an, da das Legierungselement Molybdän die Versprödungsneigung der nicht-rostenden austenitischen Chrom-Nickel-Silicium-Stähle deutlich erhöht, was u.a. bei der Warmumformung, beispielsweise beim Pressen von Böden, zu erheblichen Schwierigkeiten führen kann. Ferner erschwert auch das Legierungselement Kupfer die Warmverarbeitbarkeit (Ullmanns Encyclopädie der technischen Chemie, 4. Auflage (1982), Band 22, S. 56) und die Heißrißanfälligkeit. Weiterhin ist zu beachten, daß kupferlegierte nichtrostende austenitische Stähle in heißen Schwefelsäuren spannungsrißkorrosionsanfällig sind (I. Class u. H. Gräfen, Werkst. u. Korros. 1964, S. 79/84; H. Gräfen, Werkst. u. Korros. 1965, S. 876/879).

Schließlich wurden noch 4-6 % Silicium enthaltende Eisen-Chrom-Nickel-Legierungen beschrieben, deren Deltaferrit-Anteil auf 5 bis 10 % begrenzt wird, damit kein zusammenhängendes Deltaferrit-Netz ausgebildet werden kann (D. J. Chronister und T. C. Spence, Corrosion 85, Paper 305, NACE, Boston/Mas., März 1985). Mit einem solchen Netzwerk ist bei Deltaferrit-Anteilen ab 10 % zu rechnen. Bei einer von D. J. Chronister et al. beschriebenen, 4,8 % Si enthaltenden Legierung sind die Abtragungsraten in auf 110°C erwärmter 95 %iger H₂SO₄ zunächst relativ gering (0,4 mm/a), steigen aber bei längerer Beanspruchungsdauer rasch auf 2,4 mm/a an. Bei 5 bis 5,2 % Si enthaltenden Legierungen wurden unter diesen Bedingungen Korrosionsgeschwindigkeiten von 0,11 bis 0,56 mm/a gefunden. Erst bei 5,6 % Si stellen sich Abtragungsraten von etwa 0,1 mm/a ein. Erhöht man die Temperatur der 95 %igen H₂SO₄ auf 130°C, werden bei einem Si-Gehalt von 5,6 % wiederum steigende Abtragungsraten beobachtet, die im ersten Prüfabschnitt (48 h) 0,66 mm/a, im zweiten Abschnitt bereits 1,24 mm/a betragen; bei einem Si-Anteil von 5,9 % liegen die Abtragungsraten bei 0,45-0,54 mm/a.

Aufgabe war es daher, Werkstoffe zur Verfügung zu stellen, die für Bauteile verwendet werden können, die heißer konzentrierter Schwefelsäure oder Oleum ausgesetzt sind, und mit denen Bauteile hergestellt werden können, die unter den o. g. extremen Bedingungen nur geringe Abtragsraten aufweisen; außerdem soll der Werkstoff gute mechanisch-technologische Eigenschaften aufweisen, so daß er bei der Herstellung von Schwefelsäure einsetzbar ist.

Diese Aufgabe konnte überraschenderweise mit ganz speziellen Werkstoffen gelöst werden.

Gegenstand der Erfindung ist die Verwendung von Knet- und Gußwerkstoffen sowie Schweißzusatzwerkstoffen aus austenitischen Eisen-Nickel-Chrom-Silicium Legierungen mit
15,5 bis 17,5 Gew.-% Nickel
10 bis 12 Gew.-% Chrom
5,7 bis 6,5 Gew.-% Silicium
bis zu max. 0,06 Gew.-% Kohlenstoff
bis zu max. 1,5 Gew.-% Mangan
bis zu max. 0,03 Gew.-% Phosphor
bis zu max. 0,03 Gew.-% Schwefel
bis zu max. 0,15 Gew.-% Titan
bis zu max. 0,8 Gew.-% Zirkonium
bis zu max. 0,2 Gew.-% Stickstoff
bis zu max. 0,3 Gew.-% Molybdän
und dem Rest als Eisen sowie minimalen Mengen an nicht vermeidbaren Beimengungen einschließlich der zur Desoxidation verwendeten Elemente Magnesium, Aluminium und Calcium für mit heißer konzentrierter Schwefelsäure oder 0 bis 10 gew.-%igem Oleum beaufschlagte Bauteile.

Zur Verbesserung der Warmumformbarkeit kann der Werkstoff vorzugsweise bis zu 0,01 Gew.-% Bor und bis zu 0,25 Gew.-% an Seltenen Erdmetallen enthalten.

Bevorzugt enthalten die Werkstoffe bis zu max. 0,03 Gew.-%, besonders bevorzugt bis zu max. 0,02 Gew.-% Kohlenstoff.

Die verwendeten Werkstoffe besitzen günstige mechanischtechnologische Eigenschaften. Trotz des hohen Anteils an Silicium ist die Kerbschlagzähigkeit der Werkstoffe zufriedenstellend, Die Legierungen lassen sich in allen technisch bedeutsamen Erzeugnisformen, wie Blech, Band, Rohr, Stab und Draht herstellen, Weitere Erzeugnisformen umfassen Stahlgußteile für beispielsweise Pumpen und Armaturen. Die Nickel-Chrom-Silicium-Eisen-Legierungen sind gut schweißbar, so daß die Fertigung von Apparaten in Schweißkonstruktion möglich ist. Der Schweißzusatz kann artgleich sein oder aber einen Deltaferrit-Anteil bis etwa 20 % aufweisen.

Die verwendeten Werkstoffe sind in hohem Maße korrosionsbeständig gegenüber einer über 75 gew.-%igen H₂SO₄, bevorzugt gegenüber 85 bis 100 gew.-%iger, besonders bevorzugt gegenüber 90 bis 100 gew.-%iger H₂SO₄ und gegenüber 0 bis 10 gew.-%igem Oleum. Diese hohe Korrosionsbeständigkeit ist selbst bei hohen Temperaturen gegeben, beispielsweise bei 90 bis 370°C, bevorzugt 150 bis 340°C, besonders bevorzugt bei 200°C bis zum Siedepunkt der verschieden hoch konzentrierten Schwefelsäuren oder Oleum. Die Werkstoffe bzw. Bauteile können bei Drucken von 0,1 bar bis 10 bar mit heißer konzentrierter Schwefelsäure oder 0 bis 10 gew.-%igem Oleum beaufschlagt werden. Die Werkstoffe können für Bauteile verwendet werden, die mit solchen heißen, konzentrierten Schwefelsäuren beaufschlagt werden. Solche Bauteile sind beispielsweise Reaktionsgefäße, Pumpen, Armaturen, Leitungen, Wärmetauscher u.a. Solche Bauteile können durch Schmieden und Walzen (Kneten), durch Gießen, durch Auskleiden, durch Plattieren, durch formgebendes Schweißen oder durch Auftragschweißen hergestellt werden.

Als hohe Korrosionsbeständigkeit wird unter den genannten erschwerten Bedingungen eine Abtragungsrate von höchstens 1 mm/a, normalerweise jedoch höchstens 0,1 bis 0,2 mm/a verstanden.

Die Eigenschaften der verwendeten Werkstoffe sind umso überraschender, als D.R. McAlister u.a., Chemical Engineering Progress, Juli 1986, S. 34/38 zeigen, daß höheren Silicium-Gehalten in austenitischen Chrom-Nickel-(Molybdän)-Stählen keine Bedeutung hinsichtlich des Korrosionsverhaltens bei Beaufschlagung mit heißer konzentrierter Schwefelsäure zukommt.

Ein weiterer Gegenstand der Erfindung ist ein Verfahren zur Herstellung von Schwefelsäure durch katalytische Oxidation von Schwefeldioxid zu Schwefeltrioxid, Absorption des Schwefeltrioxids in Schwefelsäure mit einer Konzentration zwischen 98 und 101 %, wobei Absorptionswärme erzeugt wird, und die Absorption in einem Turm, in den die Schwefelsäure bei einer Temperatur von über 120°C eingebracht wird, durchgeführt wird, die den Warmeaustauscher verlassende Schwefelsäure eine Konzentration von mehr als 99 % und eine Temperatur von mehr als 120°C aufweist, die Absorptionswärme in einem Wärmeaustauscher durch Übertragung auf andere Flüssigkeiten oder durch Erzeugung von Dampf abgeführt wird, welches dadurch gekennzeichnet ist, daß der Wärmeaustauscher und gegebenenfalls andere mit der heißen Schwefelsäure in Kontakt stehende Bauteile aus austenitischen Eisen-Nickel-Chrom-Silicium-Legierungen mit
15,5 bis 17,5 Gew.-% Nickel
10 bis 12 Gew.-% Chrom
5,7 bis 6,5 Gew.-% Silicium
bis zu max. 0,06 Gew.-% Kohlenstoff
bis zu max. 1,5 Gew.-% Mangan
bis zu max. 0,03 Gew.-% Phosphor
bis zu max. 0,03 Gew.-% Schwefel
bis zu max. 0,15 Gew.-% Titan
bis zu max. 0,8 Gew.-% Zirkonium
bis zu max. 0,2 Gew.-% Stickstoff
bis zu max. 0,3 Gew.-% Molybdän
und dem Rest als Eisen
sowie minimalen Mengen an nicht vermeidbaren Beimengungen einschließlich der zur Desoxidation verwendeten Elemente Magnesium, Aluminium und Calcium besteht.

Durch den Einsatz der speziellen Legierungen ist es möglich, bei der Schwefelsäureherstellung hochwertigen Dampf (Dampfdruck > 5 bar) zu erzeugen und damit die Absorptionswärme optimal zu nutzen. Zudem kann bei hohen Temperaturen der Schwefelsäure gearbeitet werden.

Die Erfindung soll anhand der nachfolgenden Beispiele näher erläutert werden.

### Beispiel

Untersucht wurden Werkstoffproben aus einem warmgewalzten, 3 mm dicken Blech folgender Zusammensetzung (Massenanteile in %):
0,015 % Kohlenstoff
5,94 % Silicium
0,68 % Mangan
0,021 % Phosphor
0,001 % Schwefel
11,34 % Chrom
17,49 % Nickel
0,09 % Molybdän
0,41 % Zirconium und
0,10 % Titan
und den Rest als Eisen.

In 96 %iger siedender Schwefelsäure (320°C) liegt die Abtragungsrate dieses austenitischen Stahls bei 0,1 bis 0,2 mm/a, während in 190°C heißer 92 %iger H₂SO₄ Abtragungsraten von < 0,1 mm/a gemessen werden,

Die geringe Strömungsabhängigkeit der Korrosion dieses austenitischen Nickel-Chrom-Silicium-Stahls in 96 %iger Schwefelsäure bei 150°C wird durch eine Abtragungsrate von < 0,1 mm/a belegt (rotierende Scheibe mit einem Durchmesser von 30 mm und einer Drehzahl von 2.000 min⁻¹).

## Patentansprüche

1. Verwendung von Knet- und Gußwerkstoffen sowie Schweißzusatzwerkstoffen aus austenitischen Eisen-Nickel-Chrom-Silicium Legierungen mit
15,5 bis 17,5 Gew.-% Nickel
10 bis 12 Gew.-% Chrom
5,7 bis 6,5 Gew.-% Silicium
bis zu max. 0,06 Gew.-% Kohlenstoff
bis zu max. 1,5 Gew.-% Mangan
bis zu max. 0,03 Gew.-% Phosphor
bis zu max. 0,03 Gew.-% Schwefel
bis zu max. 0,15 Gew.-% Titan
bis zu max. 0,8 Gew.-% Zirkonium
bis zu max. 0,2 Gew.-% Stickstoff und
bis zu max. 0,3 Gew.-% Molybdän
und dem Rest als Eisen
sowie minimalen Mengen an nicht vermeidbaren Beimengungen einschließlich der zur Desoxidation verwendeten Elemente Magnesium, Aluminium und Calcium für mit heißer konzentrierter Schwefelsäure oder 0 bis 10 gew.-%igem Oleum beaufschlagte Bauteile.

2. Verwendung der Werkstoffe nach Anspruch 1, dadurch gekennzeichnet, daß die Legierungen zusätzlich bis zu 0,01 Gew.-% Bor und bis zu 0,25 Gew.-% Seltene Erdmetalle enthalten.

3. Verwendung der Werkstoffe nach Anspruch 1 oder 2, dadurch gekennzeichnet, daß die Legierungen bis zu max. 0,03 Gew.-%, bevorzugt bis zu max. 0,02 Gew.-%, Kohlenstoff enthalten.

4. Verwendung der Werkstoffe nach einem der Ansprüche 1-3 für Bauteile, die mit über 75 gew.-%iger, bevorzugt mit 85 bis 100 gew.-%iger, besonders bevorzugt mit 90 bis 100 %iger Schwefelsäure oder mit 0 bis 10 gew.-%igem Oleum beaufschlagt werden.

5. Verwendung der Werkstoffe nach einem der Ansprüche 1-4 für Bauteile, die mit heißer konzentrierter Schwefelsäure oder mit 0 bis 10 gew.-%igem Oleum bei Temperaturen von 90 bis 370°C, bevorzugt 150 bis 340°C, besonders bevorzugt 200°C bis zum Siedepunkt der verschieden hoch konzentrierten Schwefelsäuren oder Oleum beaufschlagt werden.

6. Verwendung der Werkstoffe nach einem der Ansprüche 1-5 für Bauteile, die mit heißer konzentrierter Schwefelsäure oder 0 bis 10 gew.-%igem Oleum bei Drucken von 0,1 bar bis 10 bar beaufschlagt werden.

7. Verwendung der Werkstoffe nach einem der Ansprüche 1-6 für mit heißer konzentrierter Schwefelsäure oder 0 bis 10 gew.-%igem Oleum beaufschlagte Tauchpumpen, vorzugsweise Antriebs-Wellen dieser Tauchpumpen.

8. Verfahren zur Herstellung von Schwefelsäure durch katalytische Oxidation von Schwefeldioxid zu Schwefeltrioxid, Absorption des Schwefeltrioxids in Schwefelsäure mit einer Konzentration zwischen 98 und 101 %, wobei Absorptionswärme erzeugt wird, und die Absorption in einem Turm, in den die Schwefelsäure bei einer Temperatur von über 120°C eingebracht wird, durchgeführt wird, die den Turm verlassende Schwefelsäure eine Konzentration von mehr als 99 % und eine Temperatur von mehr als 120°C aufweist, die Absorptionswärme in einem Wärmeaustauscher durch Übertragung auf andere Flüssigkeiten oder durch Erzeugung von Dampf abgeführt wird, dadurch gekennzeichnet, daß der Wärmeaustauscher und gegebenenfalls andere mit der heißen Schwefelsäure in Kontakt stehende Bauteile aus einem Werkstoff aus austenitischen Eisen-Nickel-Chrom-Silicium-Legierungen mit
15,5 bis 17,5 Gew.-% Nickel
10 bis 12 Gew.-% Chrom
5,7 bis 6,5 Gew.-% Silicium
bis zu max. 0,06 Gew.-% Kohlenstoff
bis zu max. 1,5 Gew.-% Mangan
bis zu max. 0,03 Gew.-% Phosphor
bis zu max. 0,03 Gew.-% Schwefel
bis zu max. 0,15 Gew.-% Titan
bis zu max. 0,8 Gew.-% Zirkonium
bis zu max. 0,2 Gew.-% Stickstoff
bis zu max. 0,3 Gew.-% Molybdän
und dem Rest als Eisen
sowie minimalen Mengen an nicht vermeidbaren Beimengungen einschließlich der zur Desoxidation verwendeten Elemente Magnesium, Aluminium und Calcium besteht.

9. Verfahren gemäß Anspruch 8, dadurch gekennzeichnet, daß die Absorptionswärme in Wärmeaustauscher zur Erzeugung von Dampf mit einem Druck von 1,5 bar bis 31 bar, vorzugsweise 16 bis 31 bar (abs.), abgeführt wird.

10. Verfahren gemäß Anspruch 8, dadurch gekennzeichnet, daß die den Turm verlassende Schwefelsäure eine Temperatur von 200 bis 280°C aufweist.

## Claims

1. Use of wrought and cast materials and welding fillers of austenitic iron-nickel-chromium-silicon alloys having
15.5 to 17.5 wt-% nickel
10 to 12 wt-% chromium
5.7 to 6.5 wt-% silicon
up to max. 0.06 wt-% carbon
up to max. 1.5 wt-% manganese
up to max. 0.03 wt-% phosphorus
up to max. 0.03 wt-% sulphur
up to max. 0.15 wt-% titanium
up to max. 0.8 wt-% zirconium
up to max. 0.2 wt-% nitrogen and
up to max. 0.3 wt-% molybdenum
and the remainder iron
together with minimal quantities of normally present impurities, including the elements magnesium, aluminium and calcium which are used for deoxidation, for components upon which hot concentrated sulphuric acid or 0 to 10 wt-% oleum impinge.

2. Use of the materials according to Claim 1,
characterised in that the alloys additionally contain up to 0.01 wt-% boron and up to 0.25 wt-% rare earth metals.

3. Use of the materials according to Claim 1 or 2,
characterised in that the alloys contain up to a maximum of 0.03 wt-%, preferably up to a maximum of 0.02 wt-%, of carbon.

4. Use of the materials according to one of Claims 1 to 3 for components which are impinged upon by sulphuric acid at a strength of over 75 wt-%, preferably 85 to 100 wt-%, particularly preferably 90 to 100%, or by 0 to 10 wt-% oleum.

5. Use of the materials according to one of Claims 1 to 4 for components which are impinged upon by hot concentrated sulphuric acid or by 0 to 10 wt-% oleum at temperatures of from 90 to 370° C, preferably 150 to 340° C, particularly preferably from 200° C up to the boiling point of the sulphuric acids or oleum at the various concentrations thereof.

6. Use of the materials according to one of Claims 1 to 5 for components which are impinged upon by hot concentrated sulphuric acid or 0 to 10 wt-% oleum at pressures of from 0.1 bar to 10 bar.

7. Use of the materials according to one of Claims 1 to 6 for submerged pumps, preferably drive shafts of the latter submerged pumps, impinged upon by hot concentrated sulphuric acid or 0 to 10 wt-% oleum.

8. Process for the production of sulphuric acid by catalytic oxidation of sulphur dioxide to sulphur trioxide, absorption of the sulphur trioxide in sulphuric acid having a concentration of between 98 and 101%, wherein heat of absorption is generated, and the absorption is performed in a tower into which the sulphuric acid is introduced at a temperature greater than 120° C, the sulphuric acid leaving the tower exhibits a concentration greater than 99% and a temperature greater than 120° C, and the heat of absorption is removed in a heat exchanger by conduction to other fluids or by steam generation, characterised in that the heat exchanger and optionally other components in contact with the hot sulphuric acid are of a material of austenitic iron-nickel-chromium-silicon alloys having
15.5 to 17.5 wt-% nickel
10 to 12 wt-% chromium
5.7 to 6.5 wt-% silicon
up to max. 0.06 wt-% carbon
up to max. 1.5 wt-% manganese
up to max. 0.03 wt-% phosphorus
up to max. 0.03 wt-% sulphur
up to max. 0.15 wt-% titanium
up to max. 0.8 wt-% zirconium
up to max. 0.2 wt-% nitrogen
up to max. 0.3 wt-% molybdenum
and the remainder iron
together with minimal quantities of normally present impurities, including the elements magnesium, aluminium and calcium which are used for deoxidation.

9. Process according to Claim 8, characterised in that the heat of absorption is removed into heat exchangers in order to generate steam having a pressure of from 1.5 to 31 bar, preferably from 16 to 31 bar (absolute).

10. Process according to Claim 8, characterised in that the sulphuric acid leaving the tower exhibits a temperature of from 200 to 280° C.

## Revendications

1. Utilisation de matériaux laminés et coulés et de matériaux d'appoint pour soudure consistant en alliages austénitiques de fer-nickel-chrome-silicium contenant
15,5 à 17,5 % en poids de nickel
10 à 12 % en poids de chrome
5,7 à 6,5 % en poids de silicium
jusqu'à 0,06 % en poids de carbone au maximum
jusqu'à 1,5 % en poids de manganèse au maximum
jusqu'à 0,03 % en poids de phosphore au maximum
jusqu'à 0,03 % en poids de soufre au maximum
jusqu'à 0,15 % en poids de titane au maximum
jusqu'à 0,8 % en poids de zirconium au maximum
jusqu'à 0,2 % en poids d'azote au maximum
jusqu'à 0,3 % en poids de molybdène au maximum,
et le solde consistant en fer
et quantités minimes d'impuretés inévitables, y compris les éléments magnésium, aluminium et calcium utilisés pour la désoxydation, pour des éléments de construction entrant en contact avec de l'acide sulfurique concentré ou de l'oléum à une concentration de 0 à 10 % en poids, chauds.

2. Utilisation des matériaux selon la revendication 1, caractérisée en ce que les alliages contiennent en outre jusqu'à 0,01 % en poids de bore et jusqu'à 0,25 % en poids de métaux des terres rares.

3. Utilisation des matériaux selon la revendication 1 ou 2, caractérisée en ce que les alliages contiennent jusqu'à 0,03 % au maximum et de préférence jusqu'à 0,02 % en poids au maximum de carbone.

4. Utilisation des matériaux selon une des revendications 1 à 3 pour des éléments de construction entrant en contact avec de l'acide sulfurique à concentration supérieure à 75 % en poids, de préférence à des concentrations de 85 à 100 % en poids et tout spécialement à des concentrations de 90 à 100 % en poids ou avec de l'oléum à une concentration de 0 à 10 % en poids.

5. Utilisation des matériaux selon une des revendications 1 à 4 pour des éléments de construction entrant en contact avec de l'acide sulfurique concentré et chaud ou avec de l'oléum à une concentration de 0 à 10 % en poids à des températures de 90 à 370°C, de préférence de 150 à 340°C, et plus spécialement à des températures allant de 200°C jusqu'au point d'ébullition des divers acides sulfuriques concentrés ou de l'oléum.

6. Utilisation des matériaux selon une des revendications 1 à 5 pour des éléments de construction entrant en contact avec de l'acide sulfurique concentré chaud ou avec de l'oléum à une concentration de 0 à 10 % en poids à des pressions de 0,1 à 10 bar.

7. Utilisation des matériaux selon une des revendications 1 à 6 pour des pompes immergées, de préférence pour les arbres moteurs de ces pompes immergées, entrant en contact avec de l'acide sulfurique concentré ou de l'oléum à une concentration de 0 à 10 % en poids, chauds.

8. Procédé pour la fabrication de l'acide sulfurique par oxydation catalytique du dioxyde de soufre en trioxyde de soufre, absorption du trioxyde de soufre dans l'acide sulfurique à une concentration de 98 à 101 % avec production de la chaleur d'absorption, l'absorption étant réalisée dans une tour dans laquelle l'acide sulfurique est introduit à une température supérieure à 120°C, l'acide sulfurique quittant la tour étant à une concentration supérieure à 99 % et à une température supérieure à 120°C, la chaleur d'absorption étant évacuée dans un échangeur de chaleur par transfert à d'autres liquides ou par production de vapeur d'eau, ce procédé se caractérisant en ce que l'échangeur de chaleur et le cas échéant d'autres éléments de construction en contact avec l'acide sulfurique chaud sont en alliages austénitiques de fer-nickel-chrome-silicium à la composition suivante :
15,5 à 17,5 % en poids de nickel
10 à 12 % en poids de chrome
5,7 à 6,5 % en poids de silicium
jusqu'à 0,06 % en poids de carbone au maximum
jusqu'à 1,5 % en poids de manganèse au maximum
jusqu'à 0,03 % en poids de phosphore au maximum
jusqu'à 0,03 % en poids de soufre au maximum
jusqu'à 0,15 % en poids de titane au maximum
jusqu'à 0,8 % en poids de zirconium au maximum
jusqu'à 0,2 % en poids d'azote au maximum
jusqu'à 0,3 % en poids de molybdène au maximum,
et le solde consistant en fer
et quantités minimes d'impuretés inévitables, y compris les éléments magnésium, aluminium et calcium utilisés pour la désoxydation.

9. Procédé selon la revendication 8, caractérisé en ce que la chaleur d'absorption est évacuée dans l'échangeur de chaleur pour production de vapeur d'eau à une pression de 1,5 bar à 31 bar, de préférence de 16 à 31 bar (absolus).

10. Procédé selon la revendication 8, caractérisé en ce que l'acide sulfurique quittant la tour est a une température de 200 à 280°C.
